# EUROPEAN PATENT APPLICATION

(11) **EP 4 750 168 A1**
(43) Date of publication of application: **27.05.2026**
(21) Application number: 24853332.5
(22) Date of filing: 06.06.2024
(51) Int. Cl.: H04W 52/02

(54) **COMMUNICATION METHOD AND APPARATUS**

(30) Priority: 11.08.2023 CN 202311019454
(71) Applicant: Huawei Technologies Co., Ltd., Shenzhen, Guangdong 518129 (CN)
(72) Inventor: SHEN, Mengkui, Shenzhen, Guangdong 518129 (CN); MA, Ni, Shenzhen, Guangdong 518129 (CN); MA, Chuanhui, Shenzhen, Guangdong 518129 (CN); LI, Ruijie, Shenzhen, Guangdong 518129 (CN)
(74) Representative: Goddar, Heinz J.
(86) International application number: PCT/CN2024/097756
(87) International publication number: WO 2025/035917

(57) **Abstract**

This application relates to the field of communication technologies, and provides a communication method and apparatus, to reduce power consumption of the communication apparatus without losing an antenna array gain. The communication apparatus provided in this application includes N beamforming channels. The N channels perform pass-through processing on input signals when the communication apparatus operates in a first mode. The N channels perform spreading and despreading processing on input signals and disable a part of intermediate frequency modules when the communication apparatus operates in a second mode, where the N channels share one or more intermediate frequency modules that are not disabled, and N is a positive integer greater than 1.

## Description

This application claims priority to Chinese Patent Application No. 202311019454.9, filed with the China National Intellectual Property Administration on August 11, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To meet continuous development of a radio access service, a communication apparatus has an increasingly high requirement on a service load capacity, and an operating bandwidth of the communication apparatus increases, a quantity of receiving and sending channels increases, and transmit power increases, resulting in increasingly high power consumption of the communication apparatus. In a high service load scenario, power consumption of a power amplification module has a high proportion in power consumption of an active antenna unit (Active Antenna Unit, AAU); and in a low service load scenario, power consumption of an intermediate frequency module and small signal processing before power amplification has a high proportion in power consumption of the AAU. Therefore, in the field of energy saving technologies, efficiency of power amplification needs to be improved, and power consumption of power amplification needs to be reduced, and in addition, when service load is low, basic power consumption generated by the intermediate frequency module and small signal processing also needs to be reduced.

Existing beamforming technologies include an analog beamforming (Analog Beamforming, ABF) technology, an analog hybrid beamforming (Analog Hybrid Beamforming, AHBF) technology, a digital beamforming (Digital Beamforming, DBF) technology, or a digital hybrid beamforming (Digital Hybrid Beamforming, DHBF) technology. In an ABF/AHBF architecture, each intermediate frequency module is connected to a plurality of radio frequency modules, and therefore, a quantity of intermediate frequency channels is usually less than a quantity of radio frequency channels. In a DBF/DHBF architecture, each radio frequency module is connected to one intermediate frequency module, and a quantity of intermediate frequency channels is usually equal to a quantity of radio frequency channels.

Currently, power consumption of the AAU may be reduced by disabling a part of channels of the communication apparatus, for example, disabling a part of intermediate frequency channels and/or radio frequency channels. However, disabling a part of channels may cause an antenna array corresponding to the channel to be unavailable, resulting in losing an antenna array gain and reducing communication performance.

### SUMMARY

Embodiments of this application provide a communication method and apparatus, to reduce power consumption of an AAU without losing an antenna array gain.

To achieve the foregoing objective, this application uses the following technical solutions.

According to a first aspect, a communication apparatus is provided. The communication apparatus includes N beamforming channels, and the communication apparatus includes: a processing module, configured to be used by the N channels to perform pass-through processing on input signals when the communication apparatus operates in a first mode, where the processing module is further configured to be used by the N channels to perform spreading and despreading processing on input signals and disable a part of intermediate frequency modules when the communication apparatus operates in a second mode, where the N channels share one or more intermediate frequency modules that are not disabled, and N is a positive integer greater than 1.

In the foregoing implementation, the communication apparatus may dynamically adjust an operating state. In the first mode, the N channels of the communication apparatus perform the pass-through processing on the input signals, to maintain an original architecture without affecting system performance. Alternatively, the communication apparatus switches to the second mode, the N channels perform the spreading and despreading processing on the input signals, and a part of intermediate frequency channels may be disabled, thereby reducing power consumption without losing an antenna array gain and without reducing the system performance.

In an implementation, the processing module includes a modulation module, and in the first mode, each channel of the N channels loads a constant codeword by using the modulation module. In the foregoing implementation, the modulation module is added, so that when the modulation module loads the constant codeword, the N channels of the communication apparatus performs the pass-through processing s on the input signals, to maintain the original architecture without affecting the system performance.

In an implementation, the processing module includes a modulation module, and in the second mode, each channel of the N channels loads a non-constant codeword by using the modulation module. In the foregoing implementation, the modulation module is added, so that when the modulation module loads the non-constant codeword, the N channels of the communication apparatus may perform the spreading and despreading processing on the input signals. Therefore, a plurality of channels may share one or more intermediate frequency modules that are not disabled, and the system performance is not affected, thereby reducing the power consumption.

In an implementation, a current service load indicator of the communication apparatus is associated with a quantity of disabled intermediate frequency channels. In the foregoing implementation, the communication apparatus may dynamically switch an operating mode based on a change of a service load, and determine a quantity of intermediate frequency channels to be disabled, thereby flexibly reducing the power consumption and improving the system performance.

In an implementation, the communication apparatus further includes a decision-making module, where the decision-making module is configured to determine, when the current service load indicator of the communication apparatus is greater than or equal to a first threshold, that the communication apparatus operates in the first mode; or determine, when the current service load indicator of the communication apparatus is less than or equal to a second threshold, that the communication apparatus operates in the second mode. In the foregoing implementation, the communication apparatus may determine the operating mode by comparing the current service load indicator with a preset threshold, so that the power consumption may be flexibly reduced, and the system performance may be improved.

In an implementation, the N channels include M intermediate frequency modules, and each intermediate frequency module is connected to one or more radio frequency modules and/or power amplification modules, where M is a positive integer greater than 1, and N is greater than or equal to M. The implementation of this application is applicable to an ABF/AHBF architecture and a DBF/DHBF architecture. For the ABF/AHBF architecture, each intermediate frequency module is connected to one radio frequency module. For the DBF/DHBF architecture, each intermediate frequency module is connected to a plurality of radio frequency modules. Therefore, the implementation of this application is flexible and easy to be implemented.

In an implementation, the modulation module includes a modulator and a demodulator, the modulator is configured to load a codeword and perform spreading processing on an input signal, and the demodulator is configured to load a codeword and perform despreading processing on an input signal. In the foregoing implementation, the modulator and the demodulator are added to load the codeword, and the modulation module may switch between the pass-through processing and the spreading/despreading processing through a change of the loaded codeword, to implement switching between the first mode and the second mode. Therefore, an objective of reducing the power consumption is achieved without losing the antenna array gain, so that the system performance is not reduced.

In an implementation, when the communication apparatus is configured to send a signal, an input signal of the demodulator is an output signal of the intermediate frequency module, an input signal of the demodulator is an output signal of a radio frequency module, or an input signal of the demodulator is an output signal of a power amplification module; or when the communication apparatus is configured to receive a signal, an output signal of the demodulator is an input signal of the intermediate frequency module, an output signal of the demodulator is an input signal of the radio frequency module, or an output signal of the demodulator is an input signal of the power amplification module.

According to a second aspect, a communication method applied to a communication apparatus is provided. The communication apparatus includes N beamforming channels, and the method includes: the N channels perform pass-through processing on input signals when the communication apparatus works in a first mode; and the N channels perform spreading and despreading processing on input signals when the communication apparatus works in a second mode, and disabling a part of intermediate frequency modules, where the N channels share one or more intermediate frequency modules that are not disabled, and N is a positive integer greater than 1.

In an implementation, in the first mode, each channel of the N channels loads a constant codeword by using a modulation module.

In an implementation, in the second mode, each channel of the N channels loads a non-constant codeword by using a modulation module.

In an implementation, a current service load indicator of the communication apparatus is associated with a quantity of disabled intermediate frequency channels.

In an implementation, the method further includes: determining, when the current service load indicator of the communication apparatus is greater than or equal to a first threshold, that the communication apparatus operates in the first mode; or determining, when the current service load indicator of the communication apparatus is less than or equal to a second threshold, that the communication apparatus operates in the second mode.

In an implementation, the N channels include M intermediate frequency modules, and each intermediate frequency module is connected to one or more radio frequency modules and/or power amplification modules, where M is a positive integer greater than 1, and N is greater than or equal to M.

In an implementation, the modulation module includes a modulator and a demodulator, the modulator is configured to load a codeword and perform spreading processing on an input signal, and the demodulator is configured to load a codeword and perform despreading processing on an input signal.

In an implementation, when the communication apparatus is configured to send a signal, an input signal of the demodulator is an output signal of the intermediate frequency module, an input signal of the demodulator is an output signal of a radio frequency module, or an input signal of the demodulator is an output signal of a power amplification module; or when the communication apparatus is configured to receive a signal, an output signal of the demodulator is an input signal of the intermediate frequency module, an output signal of the demodulator is an input signal of the radio frequency module, or an output signal of the demodulator is an input signal of the power amplification module.

According to a third aspect, a communication apparatus is provided. The communication apparatus includes a processor and a memory coupled to the processor, the memory stores computer program code, the computer program code includes computer instructions, and when the computer instructions are executed by the processor, the communication apparatus is caused to perform the method according to any one of the second aspect.

According to a fourth aspect, a computer-readable storage medium is provided. The computer-readable storage medium stores computer-executable instructions, and when the computer-executable instructions are invoked by a computer, the computer is caused to perform the method according to any one of the second aspect.

According to a fifth aspect, a computer program product including instructions is provided. When the computer program product is run on a computer, the computer is caused to perform the method according to any one of the second aspect.

According to a sixth aspect, a chip is provided. The chip is coupled to a memory, and is configured to read and execute program instructions stored in the memory, to implement the method according to any one of the second aspect.

It may be understood that, any communication method, communication apparatus, computer-readable storage medium, computer program product, or chip provided above may be applied to the corresponding communication apparatus provided in the first aspect. Therefore, for beneficial effects that can be achieved by the communication method, the communication apparatus, the computer-readable storage medium, the computer program product, and the chip, refer to the beneficial effects in the corresponding methods provided above. Details are not described herein again.

### BRIEF DESCRIPTION OF DRAWINGS

FIG. 1 is a diagram of an architecture of a communication system according to an embodiment of this application;
FIG. 2 is a diagram of an architecture of a communication apparatus according to an embodiment of this application;
FIG. 3 is a diagram of a beamforming architecture according to an embodiment of this application;
FIG. 4 is a diagram of another beamforming architecture according to an embodiment of this application;
FIG. 5 is a diagram of power consumption statistics of a communication apparatus according to an embodiment of this application;
FIG. 6 is a diagram of a communication method according to an embodiment of this application;
FIG. 7 to FIG. 16 are diagrams 1 to 10 of a communication apparatus according to an embodiment of this application; and
FIG. 17 is a diagram of an architecture of another communication apparatus according to an embodiment of this application.

### DESCRIPTION OF EMBODIMENTS

The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features. In the description of embodiments, unless otherwise specified, "a plurality of" means two or more.

It should be noted that in this application, the term like "example" or "for example" is used to represent giving an example, an illustration, or descriptions. Any embodiment or design solution described as an "example" or "for example" in this application should not be explained as being more preferred or having more advantages than another embodiment or design solution. Exactly, use of the words such as "example" or "for example" is intended to present a relative concept in a specific manner.

In this application, unless otherwise clearly specified and limited, a term "connection" should be understood in a broad sense. For example, the "connection" may be a fixed connection, a detachable connection, or an integrated connection, or may be a direct connection or an indirect connection implemented through an intermediate medium.

In embodiments of this application, the term "wireless communication" may also be referred to as "communication" for short, and the term "communication" may also be described as "data transmission", "information transmission", or "transmission".

In addition, in this application, greater than or equal to a value may be replaced with greater than the value, or less than or equal to a value may be replaced with less than the value. On the contrary, greater than a value may be replaced with greater than or equal to the value, or less than a value may be replaced with less than or equal to the value. In other words, whether it is considered that equal to a value meets a condition may be flexibly set and adjusted according to a requirement. This is not specifically limited in this application.

In addition, "pre-configuration" in embodiment of this application may be a configuration performed for the apparatus in advance before a procedure is performed, or may be understood as a configuration predefined in a standard.

The following clearly and completely describes the technical solutions in embodiments of this application with reference to the accompanying drawings in embodiments of this application. It is clear that, the described embodiments are merely a part but not all of embodiments of this application. All other embodiments obtained by a person of ordinary skill in the art according to embodiments of this application without creative efforts shall fall within the protection scope of this application.

An implementation environment and an application scenario of embodiments of this application are briefly described first.

The method provided in embodiments of this application may be applied to any communication apparatus in various communication systems, for example, a network device or a terminal.

The network device may include an access network device, and is a radio access network (radio access network, RAN) node (or device) that connects the terminal to a wireless network, for example, a base station. Examples of some RAN nodes are: a next generation NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), and the like. In addition, the RAN node may also be a device that provides a base station function in device-to-device (Device-to-Device, D2D) communication, vehicle-to-everything (vehicle-to-everything, V2X) communication, or machine type communication (machine type communication, MTC), a satellite, a base station in a future communication system, or the like. This is not limited.

The terminal may also be referred to as a terminal device, a user unit, a user station, a mobile station, a remote station, a remote terminal device, a mobile device, user equipment (user equipment, UE), a wireless communication device, a user agent, or a user apparatus. The terminal device in this application may be applied to various communication scenarios, for example, the D2D communication, the V2X communication, the MTC, internet of things (internet of things, IOT), virtual reality (virtual reality, VR), augmented reality (augmented reality, AR), industrial control (industrial control), self driving (self driving), telemedicine (telemedicine), smart grid (smart grid), smart furniture, smart office, smart wearable, smart transportation, and smart city (smart city). The terminal device may be a mobile phone (mobile phone), a tablet computer (pad), a computer having a wireless transceiver function, a wearable device, an aerospace device, an uncrewed aerial vehicle device, or the like. In embodiments of this application, a chip used in the foregoing device may also be referred to as a terminal.

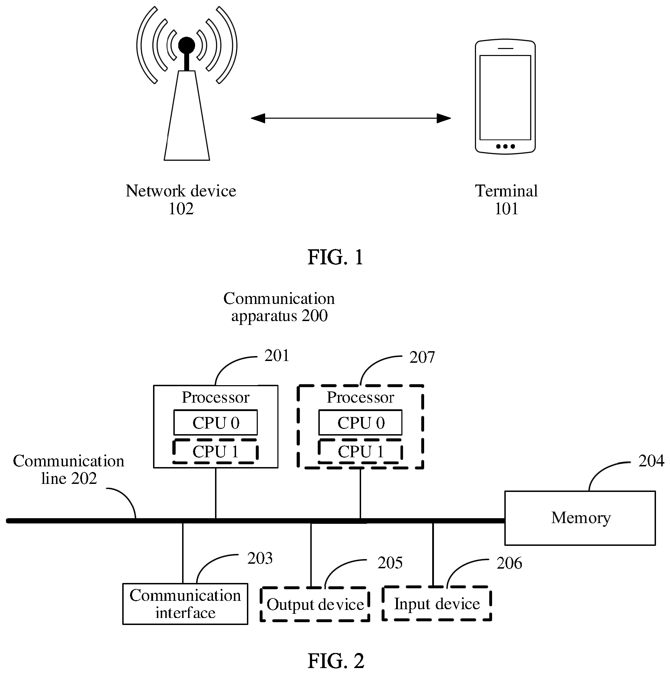

The foregoing communication apparatus may be applied to a fifth generation mobile communication (The fifth generation, 5G) or a new radio (New radio, NR) NR communication system, or may be applied to any other wireless communication systems having a similar structure and function. As shown in FIG. 1, a communication system includes at least a terminal 101 and a network device 102.

The communication system provided in this embodiment of this application includes but is not limited to: a non-terrestrial network (Non-Terrestrial Network, NTN) communication system, a narrow band-internet of things (Narrow Band-Internet of Things, NB-IoT) system, a global system for mobile communications (Global System for Mobile Communications, GSM), an enhanced data rate for GSM evolution (Enhanced Data rate for GSM Evolution, EDGE) system, a wideband code division multiple access (Wideband Code Division Multiple Access, WCDMA) system, a code division multiple access (Code Division Multiple Access, CDMA2000) 2000 system, a time division-synchronous code division multiple access (Time Division-Synchronous Code Division Multiple Access, TD-SCDMA) system, a long term evolution (Long Term Evolution, LTE) system, a 5G mobile communication system, three major application scenarios of a future communication system, including enhanced mobile broadband (Enhanced Mobile Broadband, eMBB), ultra-reliable low-latency communication (Ultra-Reliable Low-Latency Communication, URLLC), and enhanced machine-type communication (Enhanced Machine-Type Communication, eMTC), and the like.

It should be noted that, FIG. 1 merely shows an example of a framework diagram, and a quantity of network element nodes included in FIG. 1 is not limited. In addition to functional nodes shown in FIG. 1, other nodes such as a core network device, a gateway device, and an application server may be further included. This is not limited. The access network device and the core network device communicate with each other through a wired network or a wireless network, for example, communicate with each other through an interface of a future communication network.

In a specific implementation, the terminal or the network device may use a composition structure shown in FIG. 2 or include components shown in FIG. 2. FIG. 2 is a diagram of a structure of a communication apparatus 200 according to an embodiment of this application. When the communication apparatus 200 has a function of the communication apparatus described in this embodiment of this application, the communication apparatus 200 may be a terminal, or a chip or a system on chip in a network device.

As shown in FIG. 2, the communication apparatus 200 may include a processor 201, a communication line 202, and a communication interface 203. Further, the communication apparatus 200 may further include a memory 204. The processor 201, the memory 204, and the communication interface 203 may be connected to each other through the communication line 202.

The processor 201 may be a central processing unit (Central Processing Unit, CPU), a general-purpose processor, a network processor (Network Processor, NP), a digital signal processor (Digital Signal Processing, DSP), a microprocessor, a microcontroller, a programmable logic device, or any combination thereof. The processor 201 may alternatively be another apparatus having a processing function, for example, a circuit, a device, or a software module.

The communication line 202 is configured to transfer information between components included in the communication apparatus 200.

The communication interface 203 is configured to communicate with another device or another communication network. The another communication network may be Ethernet, a radio access network (Radio Access Network, RAN), a wireless local area network (Wireless Local Area Network, WLAN), or the like. The communication interface 203 may be an interface circuit, a pin, a radio frequency module, a transceiver, or any apparatus that can implement communication.

The memory 204 is configured to store instructions. The instructions may be computer programs.

The memory 204 may be a read-only memory (Read-only Memory, ROM) or another type of static storage device that can store static information and/or instructions; may be a random access memory (Random Access Memory, RAM) or another type of dynamic storage device that can store information and/or instructions; or may be an electrically erasable programmable read-only memory (Electrically Erasable Programmable read-only Memory, EEPROM), a compact disc read-only memory (Compact Disc read-only Memory, CD-ROM) or another optical disc storage, an optical disc storage, a magnetic disk storage medium, or another magnetic storage device. The optical disc storage includes a compact optical disc, a laser disc, an optical disc, a digital versatile disc, a Blu-ray disc, or the like.

It should be noted that, the memory 204 may exist independently of the processor 201, or may be integrated with the processor 201. The memory 204 may be configured to store instructions, program code, some data, or the like. The memory 204 may be located in the communication apparatus 200, or may be located outside the communication apparatus 200. This is not limited. The processor 201 is configured to execute the instructions stored in the memory 204, to perform a method provided in the following embodiment of this application.

In an example, the processor 201 may include one or more CPUs, for example, a CPU 0 and a CPU 1 in FIG. 2.

In an optional implementation, the communication apparatus 200 includes a plurality of processors. For example, in addition to the processor 201 in FIG. 2, the communication apparatus 200 may further include a processor 207.

In an optional implementation, the communication apparatus 200 further includes an output device 205 and an input device 206. For example, the input device 206 is a device like a keyboard, a mouse, a microphone, or a joystick, and the output device 205 is a device like a display or a speaker.

It should be noted that, the communication apparatus 200 may be a wearable device, a desktop computer, a portable computer, a network server, a mobile phone, a tablet computer, a wireless terminal, an embedded device, a chip system, or a device having a structure similar to that in FIG. 2. In addition, the composition structure shown in FIG. 2 does not constitute a limitation on the communication apparatus. In addition to the components shown in FIG. 2, the communication apparatus may include more or fewer components than those shown in FIG. 2, or some components may be combined, or there may be a different component layout.

In this embodiment of this application, the chip system may include a chip, or may include a chip and another discrete device.

Before embodiments of this application are described, beamforming-related technologies are first briefly described.

Beamforming (Beamforming) is also referred to as beam shaping or spatial filtering, and is a signal processing technology of using a sensor array to send and receive signals directionally. The beamforming technology is achieved by adjusting a parameter of a basic unit of a phase array in such a way that signals at particular angles experience constructive interference while signals at some other angles experience destructive interference. Therefore, beamforming can concentrate antenna energy of the communication apparatus to a specific user Beamforming may be applied to both a signal transmit end and a signal receive end.

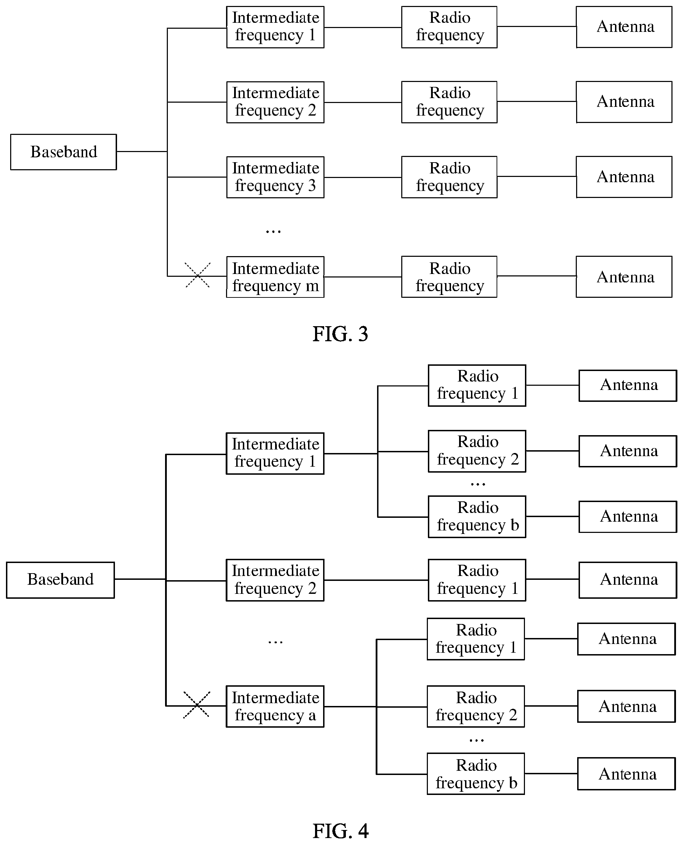

Currently, beamforming technologies are classified into a DBF/DHBF technology and an ABF/AHBF technology. As shown in FIG. 3, a DBF/DHBF architecture in a communication apparatus includes m channels including modules such as a baseband, intermediate frequency modules, radio frequency modules, and antennas, where m intermediate frequency modules are included, and each intermediate frequency module is connected to one radio frequency module. Therefore, in the DBF/DHBF architecture, a quantity of radio frequency modules is equal to a quantity of intermediate frequency modules, that is, a quantity of radio frequency channels is equal to a quantity of intermediate frequency channels.

The intermediate frequency module is configured to process an intermediate frequency signal, and may include functions such as an analog-to-digital converter (Analog-to-Digital Converter, ADC), a digital-to-analog converter (Digital-to-Analog Converter, DAC), intermediate frequency amplification, frequency mixing, and attenuation.

The radio frequency module is configured to process a radio frequency signal, and may include functions such as filtering, amplification, phase shifting, and attenuation. The radio frequency module may be specifically a transmitter-receiver, and is responsible for transmitting (Transmitter, Tx) a high-frequency analog signal to an antenna, or receiving (Receiver, Rx) a high-frequency analog channel from an antenna. In embodiments of this application, the radio frequency module may be referred to as a TRX module for short. The TRX module mainly includes a phase and amplitude control circuit. Optionally, a power amplifier (Power Amplifier, PA) or a low noise amplifier (Low Noise Amplifier, LNA) may be further integrated in the radio frequency module. The PA and the LNA are mainly configured to perform power amplification on a "small signal". The PA is mainly configured to send a signal, and the LNA is mainly configured to receive a signal. Alternatively, the PA or the LNA may be independently deployed as power amplification modules, and is independently deployed from the radio frequency module. This is not limited in this application.

It should be noted that, in embodiments of this application, signal processing at each stage may be referred to as a channel. To be specific, a channel for signal processing by the radio frequency module may be referred to as a radio frequency channel, and a channel for signal processing by the intermediate frequency module may be referred to as an intermediate frequency channel.

As shown in FIG. 4, an ABF/AHBF architecture in a communication apparatus includes an intermediate frequency modules, where each intermediate frequency module is connected to b radio frequency modules, and both a and b are positive integers greater than 1. Therefore, in the ABF/AHBF architecture, a quantity of intermediate frequency channels is usually less than or far less than a quantity of radio frequency channels.

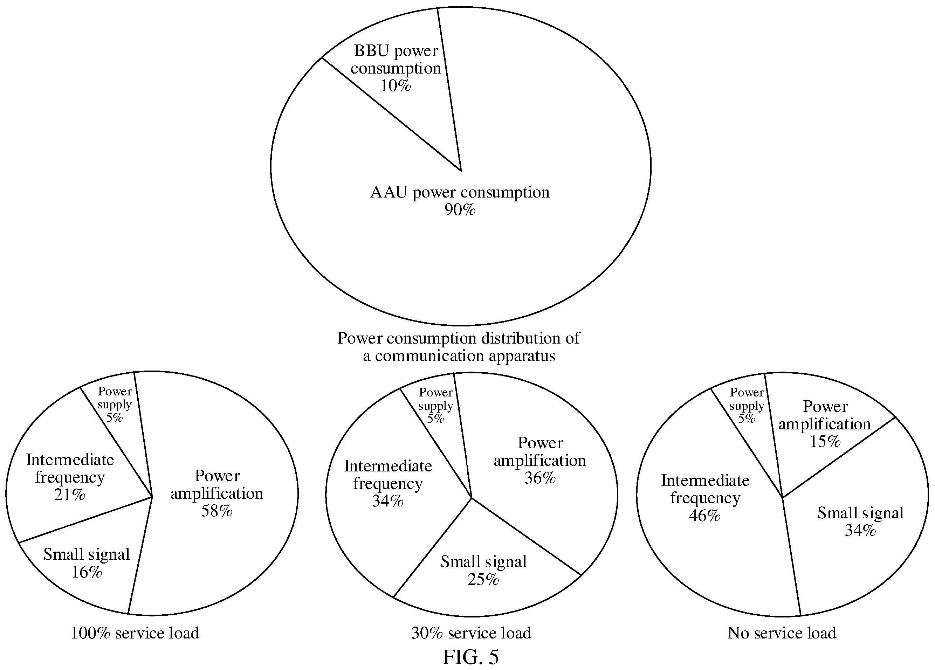

To reduce power consumption of a communication apparatus and improve communication efficiency, in consideration of power consumption distribution of the communication apparatus, power consumption of an AAU accounts for about 90% of power consumption of the entire apparatus, as shown in FIG. 5. The power consumption of the AAU module may include power consumption of a power supply, an intermediate frequency module, power amplification, small signal processing before the power amplification, or the like. It is learned from related statistics that, under different service load power consumption of the communication apparatus, a power consumption proportion of each module in the AAU changes significantly.

For example, it may be learned from statistics shown in FIG. 5 that, when service load is 100%, a power consumption proportion of power amplification is the highest, which is about 58%, and a power consumption proportion of a digital intermediate frequency and a small signal is about 37%. When the service load is 30%, the power consumption proportion of the power amplification decreases to 37%, and the power consumption proportion of the digital intermediate frequency and the small signal is 59%. Under a condition of no load, that is, no service load, the power consumption proportion of the power amplification is only 15%, and the power consumption proportion of the digital intermediate frequency and the small signal increases to 80%.

Therefore, in the field of AAU energy saving technologies, efficiency of power amplification needs to be improved, and power consumption of the power amplification needs to be reduced, and in addition, when service load is low, basic power consumption generated by small signal processing and an intermediate frequency signal further needs to be reduced. However, it may be learned from the foregoing existing communication apparatus architectures that, if a part of intermediate frequency channels are disabled to reduce power consumption, a radio frequency module and an antenna array that are connected to the disabled intermediate frequency channel are also disabled and unavailable, resulting in losing an antenna gain and reducing communication performance.

The following describes a communication method and a communication apparatus in embodiments of this application.

This application provides a communication method. A code domain degree of freedom is introduced, so that a communication apparatus can freely switch between a fully-connected state and an energy saving state based on a service load indicator. For example, when service load is low, the communication apparatus may enter the energy saving state, and a part of intermediate frequency channels of N beamforming channels are disabled, thereby reducing power consumption without losing an antenna gain.

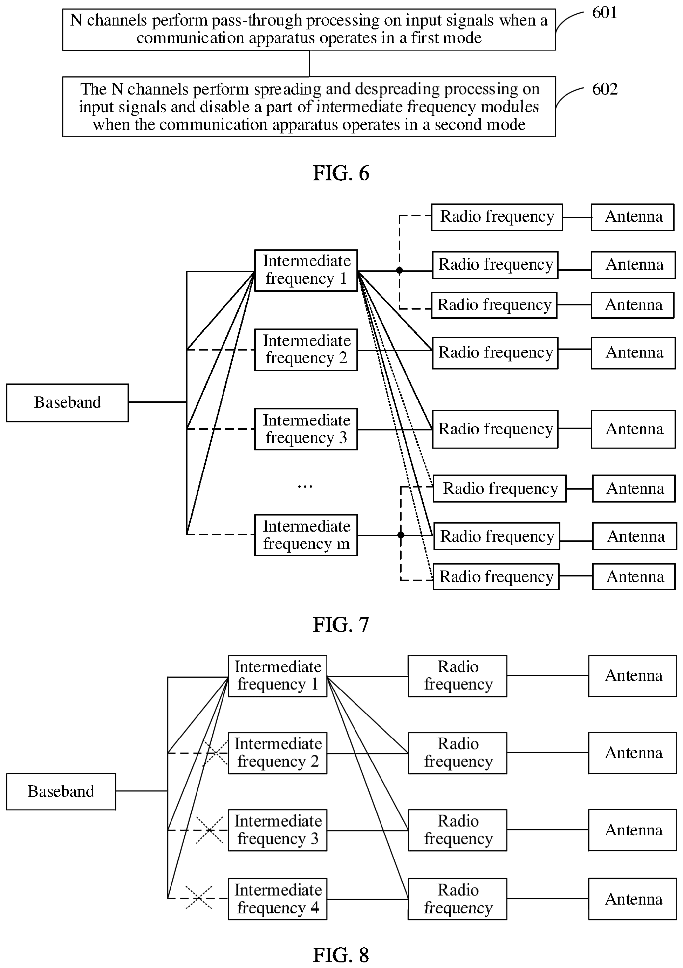

As shown in FIG. 6, the method may include the following steps.

601: The N channels perform pass-through processing on input signals when the communication apparatus operates in a first mode.

For example, the method may be applied to a communication apparatus 700 shown in FIG. 7. The communication apparatus includes the N beamforming channels. One beamforming channel is a signal processing channel from a baseband to an antenna array. As shown in FIG. 7, an information processing channel from the baseband to the antenna array may include a processing procedure of an intermediate frequency signal and a radio frequency signal. In this embodiment of this application, a signal processing channel of an intermediate frequency module may be referred to as an intermediate frequency channel, and a signal processing channel of a radio frequency module may be referred to as a radio frequency channel. In addition, optionally, the communication apparatus may further include a channel through which a power amplification module performs power amplification processing on the signal, and the channel may be referred to as a power amplification channel; or the power amplification module may be integrated into the radio frequency module.

When the communication apparatus operates in the first mode, all intermediate frequency channels and radio frequency channels in the communication apparatus shown in FIG. 7 operate normally, and all the N channels perform pass-through processing on the input signals.

In an implementation, the first mode may refer to that when it is determined that the communication apparatus is currently in high service load, the communication apparatus enters an operating state of a performance mode, that is, a fully-connected operating state, and all intermediate frequency modules and radio frequency modules in the communication apparatus are connected, and both the intermediate frequency channels and the radio frequency channels operate normally.

602: The N channels perform spreading and despreading processing on input signals and disable a part of intermediate frequency modules when the communication apparatus operates in a second mode.

The N channels may share one or more intermediate frequency modules that are not disabled, and perform the spreading and despreading processing on the input signals. Spreading is a signal modulation method in which a bandwidth of an input signal may be expanded by using a specific codeword sequence to obtain a spread spectrum signal. For example, the spreading processing may be performed by performing an inner product operation on a series of orthogonal codeword sequences and a baseband modulation signal. Despreading is inverse processing of spread spectrum modulation. The spread spectrum signal is processed by using a specific codeword sequence and restored to a signal with an original bandwidth.

For example, the communication apparatus includes M intermediate frequency modules, that is, includes M intermediate frequency channels. When the communication apparatus operates in the second mode, i intermediate frequency channels in the M intermediate frequency channels may be disabled, and the communication apparatus may share a remaining intermediate frequency channel that is not disabled, that is, M-i intermediate frequency channels, in the M intermediate frequency channels except the i intermediate frequency channels that are disabled. N, M, and i are all positive integers greater than 1.

It may be learned from the foregoing beamforming architecture that, each intermediate frequency module may be connected to one or more radio frequency modules, and each radio frequency module may be connected to one antenna array. Therefore, N is greater than or equal to M. For a DBF/DHBF architecture, each intermediate frequency module is connected to one radio frequency module. For an ABF/AHBF architecture, each intermediate frequency module is connected to a plurality of radio frequency modules, and quantities of radio frequency modules connected to intermediate frequency modules may be the same or may be different.

For example, as shown in FIG. 7, when the communication apparatus operates in the second mode, a part of intermediate frequency channels in a plurality of intermediate frequency channels in the communication apparatus may be disabled, and the N channels may share one or more intermediate frequency modules that are not disabled.

For example, as shown in FIG. 8, using a DBF/DHBF architecture as an example, the communication apparatus includes four intermediate frequency channels. In the second mode, the communication apparatus may disable three of the intermediate frequency channels, and reserve only one intermediate frequency channel, where four beamforming channels may share an intermediate frequency module that is not disabled.

In an implementation, the second mode may refer to that when it is determined that the communication apparatus is currently in medium/low service load, the communication apparatus enters an operating state of an energy saving mode, that is, an operating state in which a part of intermediate frequency channels are disabled. The communication apparatus disables a part of intermediate frequency channels, and the N channels may share a part of intermediate frequency modules that are not disabled.

In an implementation, a determining basis for the communication apparatus to switch to the first mode or the second mode may be determined by comparing a current service load indicator with a pre-configured threshold. For example, a first threshold is pre-configured in the communication apparatus, and it is determined that, when the current service load indicator of the communication apparatus is greater than or equal to a first threshold, the communication apparatus operates in the first mode. In addition, a second threshold is pre-configured in the communication apparatus, and it is determined that, when the current service load indicator of the communication apparatus is less than or equal to a second threshold, the communication apparatus operates in the second mode. For example, the first threshold and the second threshold may be the same as or different from each other.

For example, the first threshold and the second threshold may be 30%. When the current service load indicator of the communication apparatus is greater than or equal to 30%, the communication apparatus operates in the first mode, and does not disable the intermediate frequency channel. When the current service load indicator of the communication apparatus is less than 30%, the communication apparatus switches to the second mode, and disables a part of intermediate frequency channels, thereby reducing power consumption. For another example, the first threshold is 40% and the second threshold may be 30%. When the current service load indicator of the communication apparatus is greater than or equal to 40%, the communication apparatus operates in the first mode, and does not disable the intermediate frequency channel. When the current service load indicator of the communication apparatus is less than or equal to 30%, the communication apparatus switches to the second mode, and disables a part of intermediate frequency channels, thereby reducing power consumption.

Further, in an implementation, a quantity of intermediate frequency channels that are disabled by the communication apparatus may be associated with the current service load indicator; or the current service load indicator of the communication apparatus is associated with a proportion of the quantity of intermediate frequency channels that are disabled to a total quantity of intermediate frequency channels. In other words, the communication apparatus may determine, based on the current service load indicator, a quantity of intermediate frequency channels to be disabled.

For example, the service load indicator of the communication apparatus may be negatively correlated with the quantity of disabled intermediate frequency channels. To be specific, a lower current service load indicator of the communication apparatus indicates a larger quantity of intermediate frequency channels that are disabled by the communication apparatus; and on the contrary, a higher current service load indicator of the communication apparatus indicates a smaller quantity of intermediate frequency channels that are disabled by the communication apparatus. For another example, the service load indicator of the communication apparatus is negatively correlated with the proportion of the quantity of intermediate frequency channels that are disabled to the total quantity of intermediate frequency channels.

For example, if the second threshold is 50%, when the current service load indicator of the communication apparatus is 100%, the quantity of intermediate frequency channels that are disabled by the communication apparatus is 0; when the current service load indicator of the communication apparatus is 50%, the quantity of intermediate frequency channels that are disabled by the communication apparatus is 1; when the current service load indicator of the communication apparatus is 30%, the quantity of intermediate frequency channels that are disabled by the communication apparatus is 2; when the current service load indicator of the communication apparatus is 10%, the quantity of intermediate frequency channels that are disabled by the communication apparatus is 3; and when the current service load indicator of the communication apparatus is 0, the quantity of intermediate frequency channels that are disabled by the communication apparatus is 4.

In an implementation, in the first mode, each channel of the N channels of the communication apparatus loads a constant codeword by using a modulation module. In the second mode, each channel of the N channels of the communication apparatus loads a non-constant codeword by using a modulation module.

In other words, the communication apparatus includes the modulation module configured to load a codeword, and the communication apparatus may implement function switching through a codeword change of the modulation module. Specifically, each channel of the N channels of the communication apparatus includes one modulation module. When the communication apparatus operates in the first mode, the modulation module may be configured to load the constant codeword, and the modulation module performs pass-through processing on a signal when using the constant codeword. When the communication apparatus operates in the second mode, the modulation module may be configured to load the non-constant codeword, and the modulation module performs spreading and despreading processing on a signal when using the non-constant codeword.

The constant codeword means that an output codeword remains constant. For example, the codeword may be {0, 0, 0, 0, 0, •••}, or the codeword is {1, 1, 1, 1, 1, •••}, or the codeword is {0, 1, 0, 1, 0, 1, •••}. On the contrary, the non-constant codeword means that an output codeword is not constant. For example, a Walsh code, a pseudo random code, and the like belong to the non-constant codeword.

Further, in an implementation, the modulation module may include a modulator and a demodulator, where the modulator is configured to load a codeword and perform modulation processing on an input signal, and the demodulator is configured to load a codeword and perform demodulation processing on an input signal. For example, when loading a non-constant codeword, the modulator may perform spreading processing on the signal, and the demodulator may load a non-constant codeword to perform despreading processing on a spread spectrum signal.

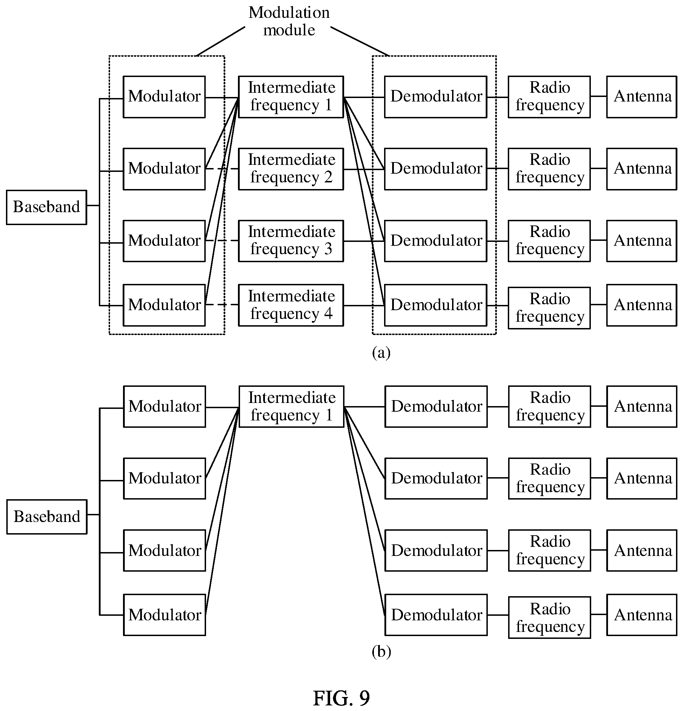

For example, as shown in FIG. 9, using a DBF/DHBF architecture as an example, the modulator may be distributed between a baseband and an intermediate frequency module of each channel of the N channels. When the communication apparatus sends a signal, an input signal of the modulator may be an output signal of the baseband, and an output signal of the modulator may be an input signal of the intermediate frequency module. The demodulator may be distributed between an intermediate frequency module and a radio frequency module of each channel of the N channels.

In this implementation, when the communication apparatus is configured to send a signal, an input signal of the demodulator may be an output signal of the intermediate frequency module. When the communication apparatus is configured to receive a signal, an output signal of the demodulator may be an input signal of the intermediate frequency module.

In this case, as shown in (a) in FIG. 9, when the communication apparatus operates in the first mode (for example, a performance mode), all intermediate frequencies operate normally. As shown in (b) in FIG. 9, when the communication apparatus operates in the second mode (for example, an energy saving mode), intermediate frequencies 2, 3, and 4 may be disabled, and only an intermediate frequency 1 remains operating normally. A plurality of channels may share the intermediate frequency 1 that is not disabled, thereby reducing power consumption without losing an antenna array gain.

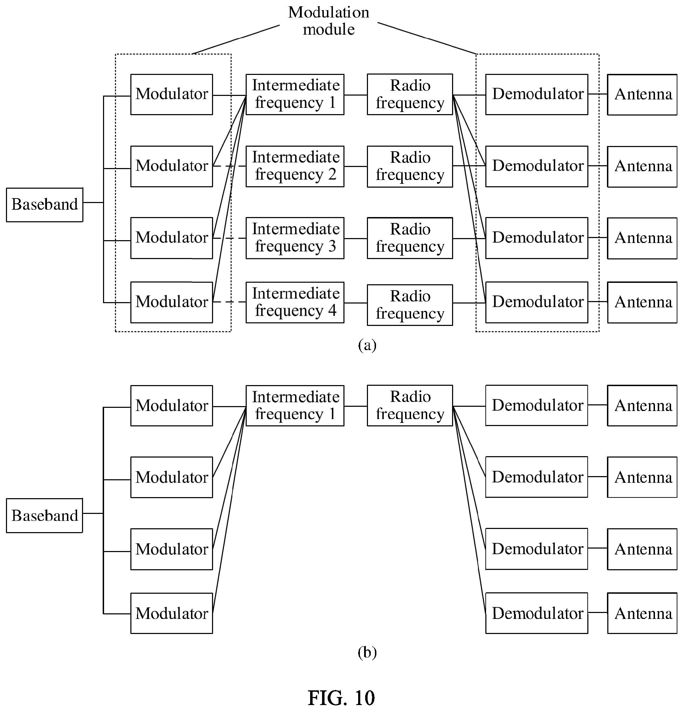

Alternatively, in another implementation, as shown in FIG. 10, using a DBF/DHBF architecture as an example, a demodulator may be distributed between a radio frequency module and an antenna array of each channel of the N channels.

In this implementation, as shown in FIG. 10, when the communication apparatus is configured to send a signal, an input signal of the demodulator may be an output signal of the radio frequency module. When the communication apparatus is configured to receive a signal, an output signal of the demodulator may be an input signal of the radio frequency module.

In this case, as shown in (a) in FIG. 10, when the communication apparatus operates in the first mode (for example, a performance mode), all intermediate frequencies operate normally. As shown in (b) in FIG. 10, when the communication apparatus operates in the second mode (for example, an energy saving mode), intermediate frequencies 2, 3, and 4 may be disabled, and only an intermediate frequency 1 remains operating normally. A plurality of channels may share the intermediate frequency 1 that is not disabled and a radio frequency module that is connected to the intermediate frequency 1, thereby reducing power consumption without losing an antenna array gain.

In addition, in another possible implementation, a PA/LNA may be independently deployed, or the PA/LNA may be integrated with the radio frequency module. In other words, in the communication apparatus shown in FIG. 9 or FIG. 10, the radio frequency module may be further integrated with the PA/LNA. Alternatively, the PA/LNA is independently deployed, and the PA/LNA may be further included between the intermediate frequency module and the antenna array in the communication apparatus. In this implementation, when the communication apparatus is configured to send a signal, an input signal of the demodulator may be an output signal of the PA. When the communication apparatus is configured to receive a signal, an output signal of the demodulator is an input signal of the LNA.

In an implementation, the communication apparatus includes a processing module, configured to implement a function of the foregoing modulation module. In addition, the communication apparatus may further include a decision-making module. The decision-making module is configured to determine whether the communication apparatus currently operates in the first mode or the second mode, and whether switching is needed. Alternatively, the foregoing decision-making function may be integrated into the processing module of the communication apparatus. This is not limited in this application.

In an implementation, in the foregoing implementation of this application, switching between the first mode and the second mode may be specifically implemented by using a modulator + a demodulator, a switch circuit, and a power splitter (also referred to as a power divider) + a combiner. The modulator + the demodulator are configured to load a codeword, and implement switching between pass-through processing and spreading/despreading processing through a change of different loaded codewords. The switch circuit is configured to connect or disable the intermediate frequency module. The power splitter + the combiner are configured to implement power allocation and combination when the communication apparatus operates in the second mode, where the power splitter may be configured to divide one path of input signal energy into two or more paths and then output the paths of signal energy, and the combiner may be configured to combine a plurality of paths of signal energy into one path of signal energy and then output the path of signal energy.

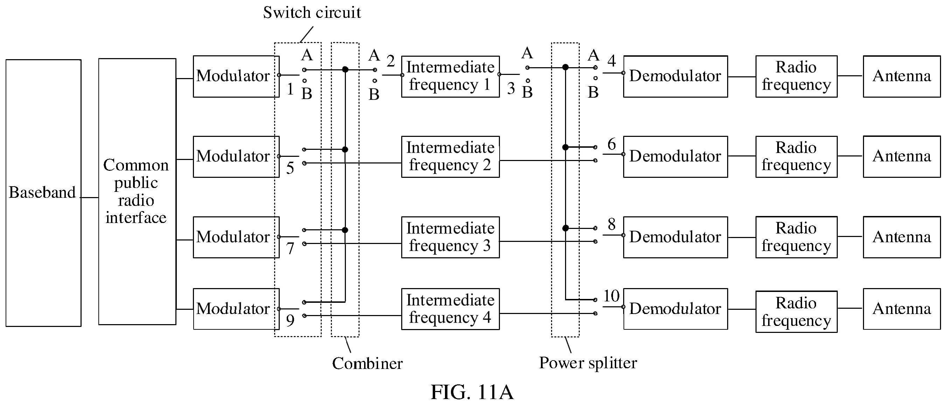

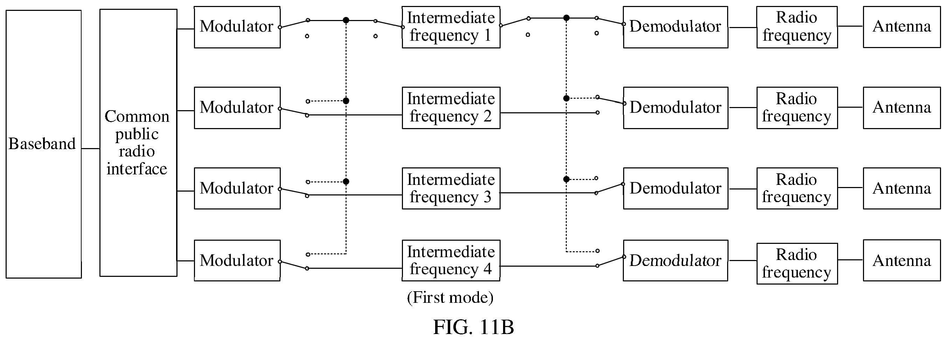

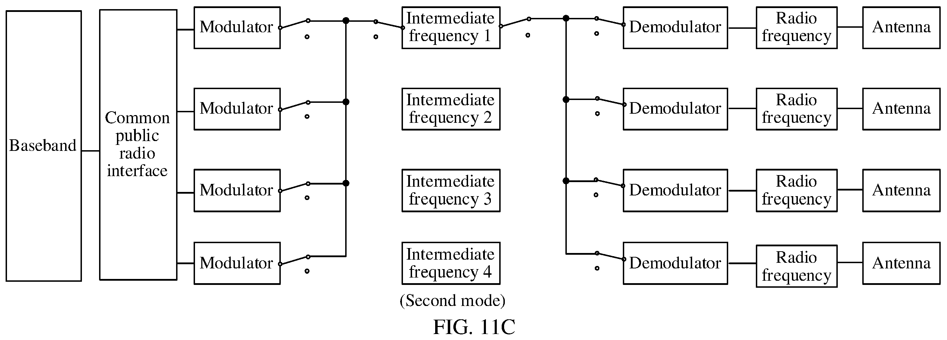

For example, using a DBF/DHBF architecture as an example, as shown in FIG. 11a to FIG. 11c, when a switch 1 is turned on at A, it indicates that an intermediate frequency 1 is connected; and when the switch 1 is turned on at B, it indicates that the intermediate frequency 1 is disconnected. Similarly, when a switch 5 is turned on at A, it indicates that an intermediate frequency 2 is disabled and the intermediate frequency 1 is shared by using the combiner; when the switch 5 is turned on at B, it indicates that the intermediate frequency 2 is connected. In addition, by controlling a switch 3 to be turned on at A, a switch 4 to be turned on at A, and a switch 6 to be turned on at A, a signal processed and output by the intermediate frequency 1 is split to different demodulators by using the power splitter, and the signal is sent through different antenna arrays.

Similarly, when the communication apparatus operates in the first mode, the modulator may load a constant codeword, and the modulator performs pass-through processing. In addition, the switch circuit is controlled to connect the intermediate frequencies 1, 2, 3, and 4, so that each intermediate frequency channel and each radio frequency channel operate normally. In this case, a signal bandwidth of each channel is normal, for example, the signal bandwidth is represented by BW. For example, the signal bandwidth of each channel may be BW = 200 MHz.

When the communication apparatus is switched to the second mode, the modulator may load a non-constant codeword and perform spreading and despreading processing. In addition, a part of intermediate frequency channels may be disabled by controlling the switch circuit. For example, as shown in FIG. 11a to FIG. 11c, the intermediate frequency 1 may remain connected, and the intermediate frequencies 2, 3, and 4 are all disabled. In this case, the signal bandwidth of each channel may be BW/N. For example, N = 4, and the signal bandwidth is 50 MHz. In the foregoing implementation, an intermediate frequency bandwidth after spreading is not increased, and when a same PA is used, power spectral density within the bandwidth is increased, and a signal-to-noise ratio is increased.

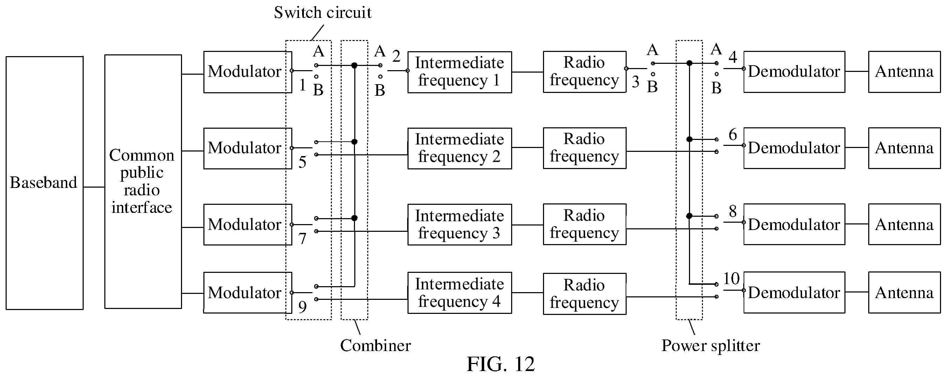

In a possible implementation, the demodulator may alternatively be located between the radio frequency module and the antenna array, as shown in FIG. 12. To be specific, when the communication apparatus is configured to send a signal, the demodulator processes the to-be-sent signal before the radio frequency module, and an output signal of the radio frequency module is an input signal of the demodulator; or when the communication apparatus is configured to receive a signal, the demodulator processes the received signal after the radio frequency module, and an input signal of the radio frequency module is an output signal of the demodulator. Similar to the embodiment described in FIG. 11a to FIG. 11c, the communication apparatus may switch between the first mode and the second mode.

In the foregoing implementation, a code domain degree of freedom is introduced into the DBF/DHBF system, and the communication apparatus may dynamically adjust an operating mode based on a change of service load, and switch between the first mode and the second mode by controlling the switch circuit and through a change of a loaded codeword of the modulator, so that the communication apparatus switches to the second mode and disables a part of intermediate frequency channels in medium and low service load scenarios, to reduce power consumption without losing an antenna array gain and reducing system performance. However, in a high service load scenario, the communication apparatus does not change an original system architecture and a signal bandwidth, and the system performance is not affected.

It should be noted that, the DBF/DHBF architecture is merely used as an example in the foregoing embodiments, but does not constitute a limitation on an implementation scope of this application. This application is also applicable to an ABF/AHBF architecture, and an implementation is similar to the foregoing descriptions. The following describes an implementation used for the ABF/AHBF architecture with reference to a specific embodiment.

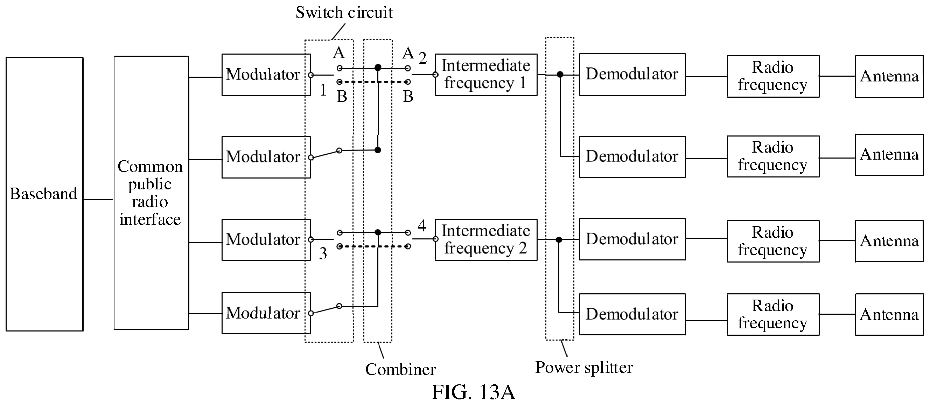

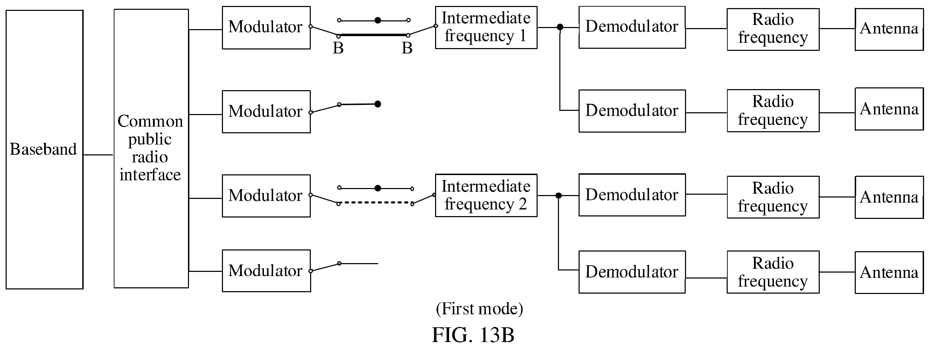

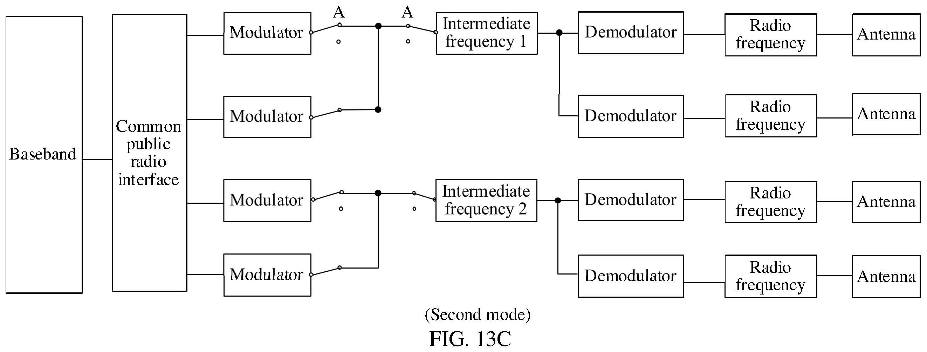

In the DBF/DHBF architecture, one intermediate frequency module in the communication apparatus is connected to one radio frequency module. In the ABF/AHBF architecture, one intermediate frequency module is connected to a plurality of radio frequency modules. In an example of the ABF/AHBF architecture shown in FIG. 13a to FIG. 13c, M is 2, that is, two intermediate frequency modules are included. Each intermediate frequency module of the two intermediate frequency modules is connected to two radio frequency modules. Therefore, N is 4, that is, four beamforming channels are included in total. Functions such as a modulator, a demodulator, a switch circuit, a combiner, a frequency divider, and the like are added, so that the communication apparatus may dynamically adjust, based on a change of service load, whether to operate in a first mode or a second mode.

Specifically, when both a switch 1 and a switch 2 shown in FIG. 13a to FIG. 13c are turned on at B, the modulation module uses a constant codeword and performs signal path, and the communication apparatus switches to the first mode, to keep original system performance of the ABF/AHBF architecture from being affected. When both the switch 1 and the switch 2 shown in FIG. 13a to FIG. 13c are turned on at A, the modulation module uses a non-constant codeword and performs spreading and despreading processing on a signal, and the communication apparatus switches to the second mode. Under a condition of a same quantity of channels, a system architecture may be changed from the ABF/AHBF to the DBF/DHBF. In this case, a transmission rate is faster while a quantity of channels is not increased, to improve communication performance. In addition, time needed for transmitting same data is shorter, and a proportion of time sequences of disabling is larger, so that average power consumption can be reduced. Therefore, energy saving and efficiency improvement can be implemented in this scenario. In addition, when the communication apparatus is in the second mode, each digital channel performs sending on only a bandwidth part (for example, BW/N, for example, N is 4), and an intermediate frequency bandwidth after spreading is not increased. In addition, power spectral density of a transmit signal may be enhanced, and scheduling of time domain and frequency domain resource is more flexible.

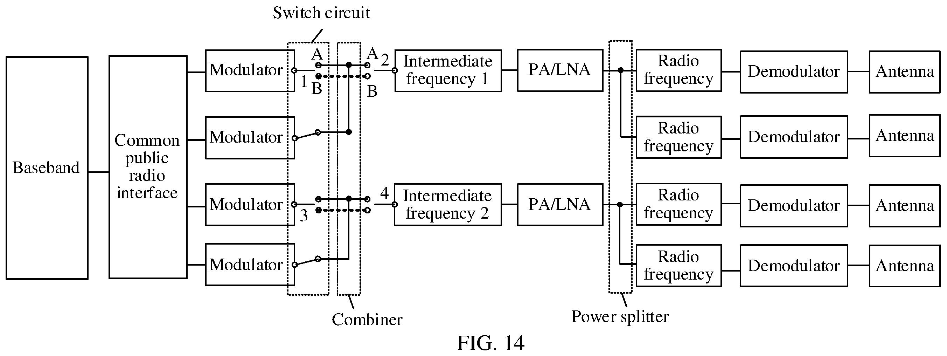

In a possible implementation, in the foregoing communication apparatus, locations of the radio frequency module and the demodulator may be exchanged. In the communication apparatus shown in FIG. 14, a PA/LNA may not be included in the radio frequency module, and the PA/LNA is located between the intermediate frequency module and the radio frequency module. In the communication apparatus shown in FIG. 14, locations of the radio frequency module and the demodulator may be exchanged.

In addition, this application further provides an implementation applied to a DBF/DHBF architecture. Each intermediate frequency channel is connected to a plurality of radio frequency channels. A modulation module and a switch circuit are added to each intermediate frequency channel. Therefore, the modulation module is configured to load a codeword, and may operate in a path-through mode or a spreading and despreading mode; and the switch circuit is configured to switch an operating mode of the communication apparatus.

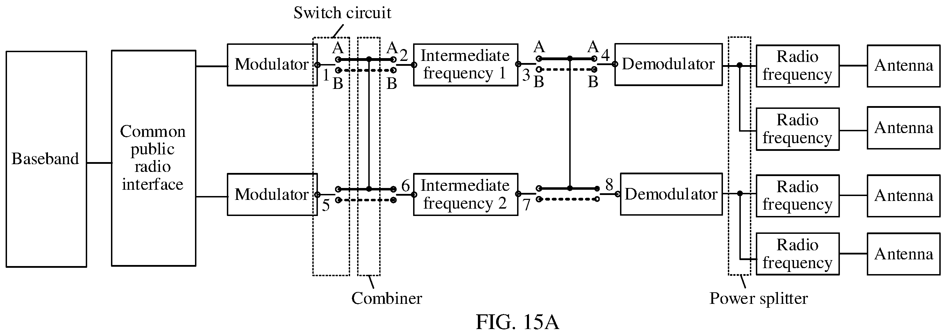

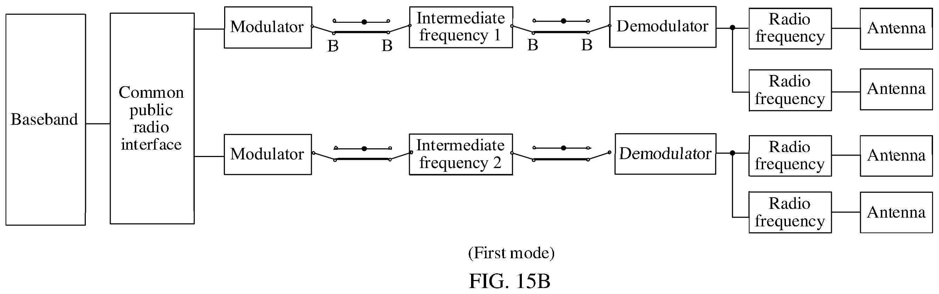

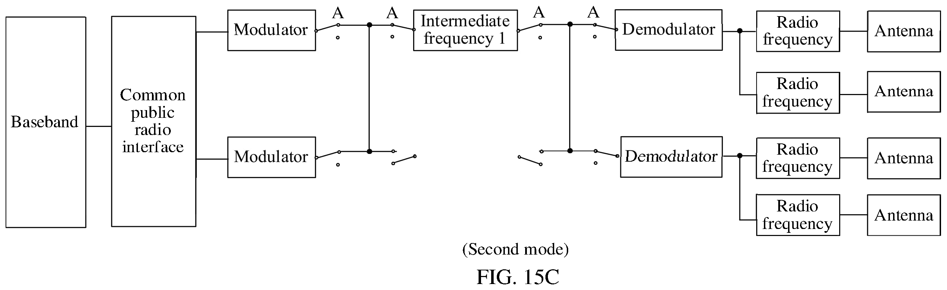

As shown in FIG. 15a to FIG. 15c, function switching of a communication apparatus may be implemented through a change of a loaded codeword of a modulation module. The modulation module performs pass-through processing on a signal when using the constant codeword, and an operating mode is switched through switching by a switch circuit. The communication apparatus operates in a first mode, each intermediate frequency channel operates normally, and a system operates in a performance mode. The modulation module performs spreading and despreading processing on a signal when using the non-constant codeword, and the operating mode is switched through switching by the switch circuit. The communication apparatus operates in a second mode, and the intermediate frequency module that is not connected may be disabled. As shown in FIG. 15a to FIG. 15c, an intermediate frequency 2 may be disabled, and the system architecture operates in an energy saving mode.

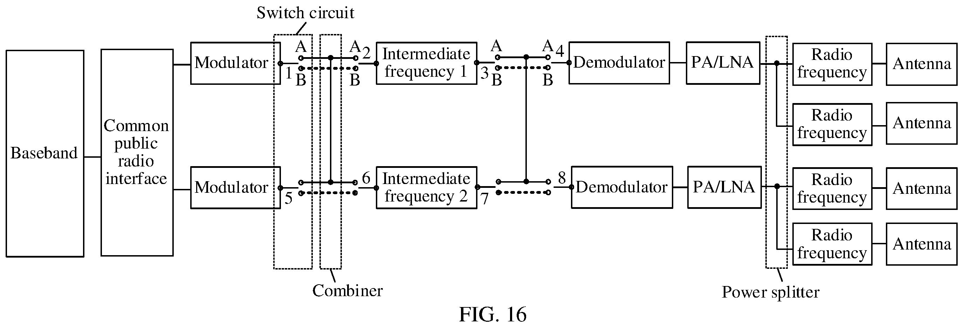

In another implementation, the radio frequency module in FIG. 15a to FIG. 15c may include a phase and amplitude control circuit, and does not include a PA/LNA, where the PA/LNA may alternatively be deployed between the intermediate frequency module and the demodulator. For example, as shown in FIG. 16, a PA/LNA may be independently deployed between a demodulator and a radio frequency module. Alternatively, in another implementation, a PA/LNA may be deployed between an intermediate frequency module and a demodulator.

In the foregoing implementation of this application, a code domain degree of freedom is introduced into the ABF/AHBF system, so that the communication apparatus may dynamically adjust a system operating mode based on a change of service load. Specifically, in a high service load scenario of the communication apparatus, the modulation module uses a constant codeword and performs pass-through processing on a signal, an original architecture and a signal bandwidth are not changed and system performance is not affected. In medium and low service load scenarios, the modulation module uses a non-constant codeword and performs spreading and despreading processing on a signal, and the communication apparatus may disable a part of intermediate frequency channels, to reduce system power consumption, without losing an antenna array gain and without affecting system performance. In addition, each digital channel performs sending on only a bandwidth part (for example, BW/N, for example, N may be 2), and an intermediate frequency bandwidth after spreading is not increased. In addition, power spectral density of a transmit signal may be enhanced.

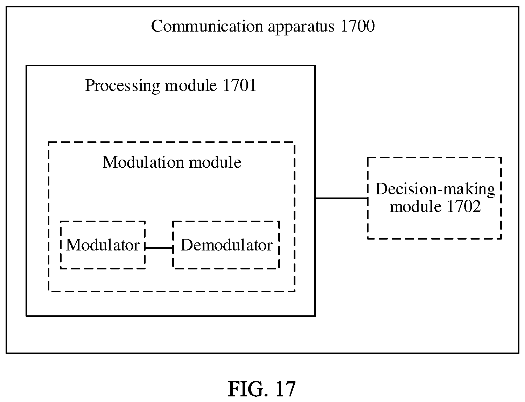

According to the foregoing implementation, this application further provides a communication apparatus. As shown in FIG. 17, the communication apparatus 1700 includes a processing module 1701.

The processing module 1701 may be configured to be used by the N channels to perform pass-through processing on input signals on N channels when the communication apparatus 1700 works in a first mode; and configured to be used by the N channels to perform spreading and despreading processing on input signals when the communication apparatus 1700 works in a second mode, and disable a part of intermediate frequency modules, where the N channels share one or more intermediate frequency modules that are not disabled, and N is a positive integer greater than 1.

In an implementation, the processing module 1701 includes a modulation module, and in the first mode, each channel of the N channels loads a constant codeword by using the modulation module.

In an implementation, the processing module 1701 includes a modulation module, and in the second mode, each channel of the N channels loads a non-constant codeword by using the modulation module.

In an implementation, a current service load indicator of the communication apparatus 1700 is associated with a quantity of disabled intermediate frequency channels.

In an implementation, the communication apparatus 1700 further includes a decision-making module 1702, where the decision-making module 1702 may be configured to determine that the communication apparatus 1700 works in the first mode when the current service load indicator of the communication apparatus 1700 is greater than or equal to a first threshold; and determine that the communication apparatus 1700 works in the second mode when the current service load indicator of the communication apparatus 1700 is less than or equal to a second threshold.

In an implementation, the N channels include M intermediate frequency modules, and each intermediate frequency module is connected to one or more radio frequency modules. Optionally, each radio frequency module may be further connected to a power amplification module like a PA/LNA. That is, each intermediate frequency module may be connected to one or more power amplification modules. M is a positive integer greater than 1, and N is greater than or equal to M.

In an implementation, the modulation module includes a modulator and a demodulator, the modulator is configured to load a codeword and perform spreading processing on an input signal, and the demodulator is configured to load a codeword and perform despreading processing on an input signal.

In an implementation, when the communication apparatus 1700 is configured to send a signal, an input signal of the demodulator is an output signal of the intermediate frequency module, an input signal of the demodulator is an output signal of a radio frequency module, or an input signal of the demodulator is an output signal of a power amplification module; or when the communication apparatus 1700 is configured to receive a signal, an output signal of the demodulator is an input signal of the intermediate frequency module, an output signal of the demodulator is an input signal of the radio frequency module, or an output signal of the demodulator is an input signal of the power amplification module.

Specifically, the communication apparatus 1700 may implement functions of the communication apparatus in the foregoing possible implementations. For details, refer to detailed descriptions in the foregoing method examples. Details are not described herein again.

It may be understood that, with reference to FIG. 2, when a structure of the foregoing communication apparatus is the communication apparatus 200 shown in FIG. 2, the foregoing processing module 1701 may be a processor, for example, a baseband chip. When the communication apparatus 1700 is a component having a function like that of the communication apparatus in the foregoing embodiment, the processing module 1701 may be the processor. When the apparatus is a chip system, the processing module 1701 may be a processor of a chip system, for example, a central processing unit (central processing unit, CPU).

It should be noted that, for a specific execution process and an embodiment of the foregoing apparatus, refer to the steps performed by the communication apparatus and the related descriptions in the foregoing method embodiments. For a resolved technical problem and a technical effect brought by resolving the technical problem, refer to the content described in the foregoing embodiments. Details are not described herein again.

In this embodiment, the apparatus is presented in a form of functional modules obtained through division in an integrated manner. The "module" herein may refer to a specific circuit, a processor for executing one or more software or firmware programs and a memory, an integrated logic circuit, and/or another device that may provide the foregoing functions. In a simple embodiment, a person skilled in the art may figure out that a sidelink transmission apparatus may be in a form shown in FIG. 2.

For example, functions/implementation processes of the processing module 1701 in FIG. 17 may be implemented by the processor 201 in FIG. 2 by invoking the computer program instructions stored in the memory 204.

In some implementations, the processor 201 in FIG. 2 may invoke computer-executable instructions stored in the memory 204, so that the apparatus 200 can perform operations implemented by the communication apparatus in the foregoing method embodiments, to implement the foregoing possible implementations of this application.

The communication apparatus 1700 in the foregoing apparatus embodiment may be completely corresponding to the communication apparatus in the method embodiment, and a corresponding module or unit performs a corresponding step.

In an example embodiment, a computer-readable storage medium including instructions or a computer program product is further provided. The foregoing instructions may be executed by the processor 201 of the communication apparatus 200 to complete the method in the foregoing embodiments. Therefore, for a technical effect that can be achieved by the computer-readable storage medium or the computer program product, refer to the foregoing method embodiments. Details are not described herein again.

This application further provides a computer program product. The computer program product includes instructions, and the instructions, when executed, cause a computer to perform operations of the terminal device or the network device that corresponds to the foregoing method.

An embodiment of this application further provides a system chip. The system chip includes a processing unit and a communication unit. The processing unit may be, for example, a processor, and the communication unit may be, for example, an input/output interface, a pin, a circuit, or the like. The processing unit may execute computer instructions, so that a communication apparatus to which the chip is applied performs operations of the communication apparatus in the method provided in the foregoing embodiments of this application.

Optionally, any communication apparatus provided in the foregoing embodiments of this application may include the system chip.

Optionally, the computer instructions are stored in a storage unit.

All or a part of the foregoing embodiments may be implemented by using software, hardware, firmware, or any combination thereof. When a software program is used to implement embodiments, embodiments may be implemented completely or partially in a form of a computer program product. The computer program product includes one or more the computer instructions. When computer program instructions are loaded and executed on a computer, the procedures or functions according to embodiments of this application are all or partially generated. The computer may be a general-purpose computer, a dedicated computer, a computer network, or other programmable apparatuses.

A person skilled in the art can easily figure out another implementation solution of this application after considering this specification and practicing the present invention that is disclosed herein. This application is intended to cover any variations, functions, or adaptive changes of this application. The variations, functions, or adaptive changes comply with general principles of this application, and include common knowledge or a commonly used technical means in the technical field that is not disclosed in this application.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication apparatus, wherein the communication apparatus comprises N beamforming channels, and the communication apparatus comprises:
a processing module, configured to be used by the N channels to perform pass-through processing on input signals when the communication apparatus operates in a first mode, wherein
the processing module is further configured to be used by the N channels to perform spreading and despreading processing on input signals and disable a part of intermediate frequency modules when the communication apparatus operates in a second mode, wherein the N channels share one or more intermediate frequency modules that are not disabled, and N is a positive integer greater than 1.

2. The apparatus according to claim 1, wherein the processing module comprises a modulation module, and in the first mode, each channel of the N channels loads a constant codeword by using the modulation module.

3. The apparatus according to claim 1, wherein the processing module comprises a modulation module, and in the second mode, each channel of the N channels loads a non-constant codeword by using the modulation module.

4. The apparatus according to any one of claims 1 to 3, wherein a current service load indicator of the communication apparatus is associated with a quantity of disabled intermediate frequency channels.

5. The apparatus according to any one of claims 1 to 4, wherein the communication apparatus further comprises a decision-making module, and the decision-making module is configured to:
determine, when the current service load indicator of the communication apparatus is greater than or equal to a first threshold, that the communication apparatus operates in the first mode; or
determine, when the current service load indicator of the communication apparatus is less than or equal to a second threshold, that the communication apparatus operates in the second mode.

6. The apparatus according to any one of claims 1 to 5, wherein the N channels comprise M intermediate frequency modules, and each intermediate frequency module is connected to one or more radio frequency modules and/or power amplification modules, wherein M is a positive integer greater than 1, and N is greater than or equal to M.

7. The apparatus according to claim 2 or 3, wherein the modulation module comprises a modulator and a demodulator, the modulator is configured to load a codeword and perform spreading processing on an input signal, and the demodulator is configured to load a codeword and perform despreading processing on an input signal.

8. The apparatus according to claim 7, wherein when the communication apparatus is configured to send a signal, an input signal of the demodulator is an output signal of an intermediate frequency module, an input signal of the demodulator is an output signal of a radio frequency module, or an input signal of the demodulator is an output signal of a power amplification module; or
when the communication apparatus is configured to receive a signal, an output signal of the demodulator is an input signal of an intermediate frequency module, an output signal of the demodulator is an input signal of a radio frequency module, or an output signal of the demodulator is an input signal of a power amplification module.

9. A communication method, applied to a communication apparatus, wherein the communication apparatus comprises N beamforming channels, and the method comprises:
performing, by the N channels, pass-through processing on input signals when the communication apparatus operates in a first mode; and
performing, by the N channels, spreading and despreading processing on input signals and disabling a part of intermediate frequency modules when the communication apparatus operates in a second mode, wherein the N channels share one or more intermediate frequency modules that are not disabled, and N is a positive integer greater than 1.

10. The method according to claim 9, wherein in the first mode, each channel of the N channels loads a constant codeword by using a modulation module.

11. The method according to claim 9, wherein in the second mode, each channel of the N channels loads a non-constant codeword by using a modulation module.

12. The method according to any one of claims 9 to 11, wherein a current service load indicator of the communication apparatus is associated with a quantity of disabled intermediate frequency channels.

13. The method according to any one of claims 9 to 12, wherein the method further comprises:
determining, when the current service load indicator of the communication apparatus is greater than or equal to a first threshold, that the communication apparatus operates in the first mode; or
determining, when the current service load indicator of the communication apparatus is less than or equal to a second threshold, that the communication apparatus operates in the second mode.

14. The method according to any one of claims 9 to 13, wherein the N channels comprise M intermediate frequency modules, and each intermediate frequency module is connected to one or more radio frequency modules and/or power amplification modules, wherein M is a positive integer greater than 1, and N is greater than or equal to M.

15. The method according to claim 10 or 11, wherein the modulation module comprises a modulator and a demodulator, the modulator is configured to load a codeword and perform spreading processing on an input signal, and the demodulator is configured to load a codeword and perform despreading processing on an input signal.

16. The method according to claim 15, wherein when the communication apparatus is configured to send a signal, an input signal of the demodulator is an output signal of an intermediate frequency module, an input signal of the demodulator is an output signal of a radio frequency module, or an input signal of the demodulator is an output signal of a power amplification module; or
when the communication apparatus is configured to receive a signal, an output signal of the demodulator is an input signal of an intermediate frequency module, an output signal of the demodulator is an input signal of a radio frequency module, or an output signal of the demodulator is an input signal of a power amplification module.

17. A communication apparatus, wherein the communication apparatus comprises:
a processor; and
a memory coupled to the processor, wherein the memory stores computer program code, the computer program code comprises instructions, and when the instructions are executed by the processor, the communication apparatus is caused to perform the method according to any one of claims 9 to 16.

18. A computer-readable storage medium, wherein the computer-readable storage medium is located in a communication apparatus, the computer-readable storage medium stores computer program code, the computer program code comprises instructions, and when the instructions are executed, the communication apparatus is caused to perform the method according to any one of claims 9 to 16.

19. A chip, wherein the chip is located in a communication apparatus, the chip comprises a processor and a memory coupled to the processor, the memory stores computer program code, the computer program code comprises instructions, and when the instructions are executed by the processor, the communication apparatus is caused to perform the method according to any one of claims 9 to 16.
